# FASCICULE DE BREVET EUROPEEN

(11) **EP 1 223 208 B1**
(45) Date de publication et mention de la délivrance du brevet: **13.04.2005**
(21) Numéro de dépôt: 02290017.9
(22) Date de dépôt: 07.01.2002
(51) Int. Cl.: C09K 11/08, C03C 3/095, C03C 3/16, C03C 3/32, C03C 4/12, C09K 11/85, C09K 11/83, C09K 11/80, C09K 11/79

(54) **Matière luminescente polycristalline mal cristallisée ou amorphe et procédé d'obtention**
Polykristalliner, schlecht kristallisierter oder amorpher Phosphor und Herstellungsverfahren
Polycristalline, poorly crystallized or amorphous phosphor and manufacturing process

(30) Priorité: 10.01.2001 FR 0100246
(43) Date de publication de la demande: 17.07.2002
(73) Titulaire: BANQUE DE FRANCE, F-75001 Paris (FR)
(72) Inventeur: Grimal, Jean-Michel, c/o Banque de France, 75001 Paris (FR)
(74) Mandataire: Fruchard, Guy

(56) Documents cités:
- EP-A- 0 265 983
- EP-A- 0 338 934
- FR-A- 2 068 386
- GB-A- 1 113 101
- DATABASE WPI Section Ch, Week 198320 Derwent Publications Ltd., London, GB; Class L01, AN 1983-48081K XP002175748 & JP 58 060639 A (KAGAKU GIJUTSU-CHO KINZ) , 11 avril 1983 (1983-04-11)

## Description

La présente invention concerne une matière luminescente polycristalline ou mal cristallisée et son procédé d'obtention.

On sait que les meilleurs rendements de photoluminescence et la meilleure précision de finition des longueurs d'onde d'émission de matériaux photoluminescents sont obtenus en utilisant des matériaux photoluminescents ayant une matrice monocristalline très bien définie, issue de la technologie des lasers. Ces matériaux présentent l'avantage d'une forte absorption dans le domaine d'excitation, d'un rendement élevé, d'une luminescence dans l'infrarouge et d'une absorption de tout le rayonnement émis dans le visible de sorte qu'ils ne peuvent être détectés visuellement lorsqu'ils sont utilisés pour la protection de documents tels que des billets de banque.

Les matériaux photoluminescents connus assurent ainsi une protection de haut niveau. Toutefois, leur fabrication passe par une phase complexe de croissance et de tirage de cristaux ayant une structure absorbante de sorte que la fabrication de ces matériaux est extrêmement onéreuse.

On connaît également, notamment des documents FR-A-2.068.386 et GB-A-1.113.101 ou EP 338 934 des céramiques vitreuses luminescentes pouvant servir en particulier dans des lasers. Ces céramiques contiennent une proportion importante de silicate qui leur procure une structure amorphe. Les structures ainsi obtenues ont un faible rendement, ce qui les rend totalement inaptes à être utilisées pour la protection de documents, en particulier lorsque la matière est broyée selon une granulométrie suffisamment fine pour pouvoir l'insérer dans le papier d'un document ou dans l'encre d'impression.

Le but de l'invention est de proposer un procédé permettant d'obtenir une matière luminescente à un coût sensiblement réduit par rapport aux procédés antérieurs tout en offrant des performances suffisantes pour une utilisation dans des applications telles que la protection de documents.

Selon l'invention on propose un procédé d'obtention de matière luminescente polycristalline ou mal cristallisée comportant les étapes de mélanger au moins un élément précurseur d'ions métalliques en poudre et au moins un élément précurseur d'ions luminescents avec une matière minérale transparente en poudre apte à réaliser une matrice polycristalline ou mal cristallisée, et chauffer le mélange à une température suffisante pour obtenir une libération des ions métalliques et des ions luminescents ainsi qu'une diffusion de ceux-ci dans la matière minérale transparente.

On obtient ainsi une matière luminescente en poudre à partir de composants disponibles industriellement et donc d'un coût très faible. Les performances d'une telle matière sont certes moins élevées que celles obtenues avec une matrice monocristalline et assurent donc une protection de moins haut niveau que les matériaux connus mais son très faible coût permet de compenser la diminution de rendement par une augmentation des quantités de matière photoluminescente pour assurer une protection suffisante tout en restant d'un coût global inférieur au coût des matériaux antérieurs.

Selon un mode de mise en oeuvre préféré du procédé selon l'invention, la matière minérale est un oxyde métallique transparent ou un mélange d'oxydes métalliques transparents, l'élément précurseur d'ions métalliques est un composé organo-métallique, et l'élément précurseur d'ions luminescents est une terre rare. La température de chauffage du mélange de poudre est alors de préférence comprise entre 1200 et 2000°C.

D'autres caractéristiques et avantages de l'invention apparaîtront à la lecture de la description qui suit d'exemples particuliers non limitatifs d'obtention de matières luminescentes au moyen du procédé selon l'invention.

Dans les exemples décrits ci-dessous la matière minérale transparente en poudre est de préférence de l'alumine cristalline obtenue de façon connue en soi par déshydratation et décomposition d'alun industriel lui-même obtenu à partir de sulfate d'aluminium et de sulfate d'ammonium.

Selon un premier exemple de réalisation, l'alumine a été mélangée avec 0,3 % en poids d'un composé organo-métallique à base de chrome et 4,6 % en poids de néodyme puis chauffé jusqu'à 1500°C. Lors de ce chauffage la partie organique du composé organo-métallique est détruite et l'ion métallique ainsi libéré diffuse dans la matrice mal cristallisée de l'alumine pour procurer à celle-ci des propriétés d'absorption de la lumière. Simultanément les ions néodymes sont dissociés et diffusent également dans la matrice de l'alumine pour procurer à celle-ci des propriétés luminescentes. Le produit obtenu à une luminescence importante à 1 µm pour une excitation dans le domaine visible.

Selon un deuxième exemple de réalisation l'alumine a été mélangée avec 5 % en poids d'un composé organo-métallique à base de nickel et 5,6 % en poids d'holmium, et traitée dans les mêmes conditions que l'exemple 1. Une luminescence importante est observée à 2 µm pour une excitation dans le domaine 0,8 - 1 µm.

Selon un troisième exemple de réalisation, l'alumine a été mélangée avec 0,5 % en poids d'un composé organo-métallique à base de chrome, 3 % en poids d'ytterbium et 5,6 % en poids l'holmium. Une luminescence importante a été observée à 2 µm pour une excitation dans le domaine 0,8 - 1 µm.

Selon un quatrième exemple, de l'alumine a été dopée avec 0,5 % en poids de chrome et 4,6 % en poids de néodyme. La matière obtenue a une luminescence importante à 1 µm pour une excitation dans le domaine visible.

Selon un cinquième exemple, de l'alumine a été dopée avec 3 % en poids de chrome et 3 % en poids d'holmium. Une luminescence importante a été observée à 2 µm pour une excitation dans le domaine visible.

On notera que dans les exemples décrits ci-dessus les matériaux luminescents obtenus n'ont pratiquement pas d'absorption dans la plage du domaine visible comprise entre 0,65 et 0.78 µm, et ont donc tous une couleur rose-rouge à la lumière naturelle.

La poudre obtenue est de préférence broyée pour réduire les grains à une granulométrie compatible avec une insertion dans le papier du document à sécuriser ou dans l'encre d'impression de ce document.

Bien entendu, l'invention n'est pas limitée aux exemples décrits ci-dessus et est susceptible de variantes réalisation qui apparaîtront à l'homme de métier sans sortir du cadre de l'invention tel que défini par les revendications.

En particulier, bien que le procédé selon l'invention ait été décrit en utilisant comme matrice hôte de l'alumine, on peut utiliser comme matrice hôte toute matière minérale transparente en poudre, polycristalline ou mal cristallisée, en particulier un oxyde métallique transparent ou un mélange d'oxydes métalliques tels que de l'oxyde de zinc, de zirconium ou d'ytrium, ou encore un verre à base de silicate, de phosphate ou de fluorure ou un mélange de ces verres.

Par ailleurs, on peut utiliser tout élément précurseur d'ions métalliques libérant l'ion métallique à une température inférieure à la température de fusion de la matière minérale transparente. En particulier les composés organo-métalliques sont satisfaisants. L'ion métallique est de préférence choisi dans le groupe comprenant le chrome, le fer, le cuivre, le nickel, le titane, le cobalt, le vanadium et l'ytterbium, le choix d'un ion ou d'un mélange d'ions étant effectué en fonction du domaine d'excitation souhaité.

Par ailleurs l'élément précurseur d'ions luminescent est de préférence une terre rare ou un mélange de terres rares, plus particulièrement choisi dans le groupe comprenant l'erbium, le néodyme, l'holmium, le thulium, l'ytterbium, le praséodyme, le dysprosium ou le thulium, le choix de l'élément ou de la composition étant fonction du domaine de luminescence souhaité.

Bien que dans les exemples donnés ci-dessus le mélange de poudre ait été chauffé à 1500°C, on pourra modifier la température de chauffage, généralement dans une plage comprise entre 1200°C et 2000°C, en fonction de la température à laquelle les ions métalliques et les ions luminescents sont libérés par les éléments précurseurs correspondants.

## Revendications

1. Matière luminescente, **caractérisée en ce qu'**elle comporte une matière minérale transparente polycristalline ou mal cristallisée en poudre dopée avec des ions métalliques et des ions luminescents.

2. Procédé d'obtention de matière luminescente polycristalline ou mal cristallisée, **caractérisé en ce qu'**il comporte les étapes de mélanger un élément précurseur d'ions métalliques en poudre et au moins un élément précurseur d'ions luminescents avec une matière minérale transparente en poudre apte à réaliser une matrice polycristalline ou mal cristallisée et chauffer le mélange à une température suffisante pour obtenir une libération des ions métalliques et des ions luminescents ainsi qu'une diffusion de ceux-ci dans la matière minérale transparente.

3. Procédé selon la revendication 2, **caractérisé en ce que** la température de chauffage est comprise entre 1200°C et 2000°C.

4. Procédé selon la revendication 2 ou la revendication 3, **caractérisé en ce que** la matière minérale est un oxyde métallique transparent ou un mélange d'oxydes métalliques transparents.

5. Procédé selon l'une quelconque des revendications 2 à 4, **caractérisé en ce que** l'élément précurseur d'ions métalliques est un composé organo-métallique.

6. Procédé selon l'une quelconque des revendications 2 à 5, **caractérisé en ce que** les ions métalliques sont choisis dans le groupe comprenant le chrome, le fer, le cuivre, le nickel, le titane, le cobalt, le vanadium et l'yterbium.

7. Procédé selon l'une quelconque des revendications 2 à 6, **caractérisé en ce que** l'élément précurseur d'ions luminescents est une terre rare ou un mélange de terres rares.

8. Procédé selon la revendication 7, **caractérisé en ce que** les terres rares sont choisies dans le groupe comprenant l'erbium, le néodyme, l'holmium, le thulium, l'yterbium, le praséodyme, le dysprosium ou le thulium.

9. Procédé selon l'une quelconque des revendications 2 à 8, **caractérisé en ce qu'**il comporte en outre une étape de broyage de la poudre obtenue.

## Patentansprüche

1. Lumineszierendes Material, **dadurch gekennzeichnet, dass** es einen pulverförmigen, transparenten, polykristallinen oder schlecht kristallisierten Mineralstoff umfasst, der mit Metallionen und Leuchtionen dotiert ist.

2. Verfahren zum Erhalt eines polykristallinen oder schlecht kristallisierten lumineszierenden Materials, **dadurch gekennzeichnet, dass** es die Schritte des Mischens eines pulverförmigen Vorläuferelements von Metallionen und mindestens eines Vorläuferelements von Leuchtionen mit einem pulverförmigen, transparenten Mineralstoff umfasst, der dazu geeignet ist, eine polykristalline oder schlecht kristallisierte Matrix zu erzeugen, sowie des Erwärmens der Mischung auf eine Temperatur, die ausreicht, um eine Freisetzung der Metallionen und der Leuchtionen sowie eine Diffusion derselben in dem transparenten Mineralstoff zu erreichen.

3. Verfahren nach Anspruch 2, **dadurch gekennzeichnet, dass** die Erwärmungstemperatur zwischen 1200°C und 2000°C liegt.

4. Verfahren nach Anspruch 2 oder Anspruch 3, **dadurch gekennzeichnet, dass** der Mineralstoff ein transparentes Metalloxid oder eine Mischung aus transparenten Metalloxiden ist.

5. Verfahren nach einem der Ansprüche 2 bis 4, **dadurch gekennzeichnet, dass** das Vorläuferelement von Metallionen eine organometallische Verbindung ist.

6. Verfahren nach einem der Ansprüche 2 bis 5, **dadurch gekennzeichnet, dass** die Metallionen aus der Gruppe ausgewählt werden, die Chrom, Eisen, Kupfer, Nickel, Titan, Kobalt, Vanadium und Ytterbium umfasst.

7. Verfahren nach einem der Ansprüche 2 bis 6, **dadurch gekennzeichnet, dass** das Vorläuferelement von Leuchtionen eine Seltene Erde oder eine Mischung von Seltenen Erden ist.

8. Verfahren nach Anspruch 7, **dadurch gekennzeichnet, dass** die Seltenen Erden aus der der Gruppe ausgewählt werden, die Erbium, Neodym, Holmium, Thulium, Ytterbium, Praseodym, Dysprosium oder Thulium umfasst.

9. Verfahren nach einem der Ansprüche 2 bis 8, **dadurch gekennzeichnet, dass** es ferner den Schritt der Zerkleinerung des erhaltenen Pulvers umfasst.

## Claims

1. A luminescent material, **characterized in that** it comprises a transparent inorganic material that is polycrystalline or poorly crystallized in powder form doped with metallic ions and with luminescent ions.

2. A method of obtaining a luminescent material that is polycrystalline or poorly crystallized, the method being **characterized in that** it comprises the steps of mixing a metallic ion precursor element in powder form and at least one luminescent ion precursor element with a transparent inorganic material in powder form suitable for making a polycrystalline or poorly crystallized matrix, and heating the mixture to a temperature that is sufficient to obtain the release of metallic ions and luminescent ions, and also the diffusion thereof within the transparent inorganic material.

3. A method a ccording to claim 2, **characterized in** t hat the temperature of heating lies in the range 1200°C to 2000°C.

4. A method according to claim 2 or claim 3, **characterized in that** the inorganic material is a transparent metallic oxide or a mixture of transparent metallic oxides.

5. A method according to any one of claims 2 to 4, **characterized in that** the metallic ion precursor element is an organometallic compound.

6. A method according to any one of claims 2 to 5, **characterized in that** the metallic ions are selected from the group comprising chromium, iron, copper, nickel, titanium, cobalt, vanadium, and ytterbium.

7. A method according to any one of claims 2 to 6, **characterized in that** the luminescent ion precursor element is a rare earth or a mixture of rare earths.

8. A method according to claim 7, **characterized in that** the rare earths are selected from the group comprising erbium, neodymium, holmium, thulium, ytterbium, praseodymium, dysprosium and thulium.

9. A method according to any one of claims 2 to 9, **characterized in that** it further includes a step of grinding the resulting powder.
